# EUROPEAN PATENT APPLICATION

(11) **EP 2 103 570 A2**
(43) Date of publication of application: **23.09.2009**
(21) Application number: 09007910.4
(22) Date of filing: 19.11.2007
(51) Int. Cl.: C01B 25/37, C01B 25/45

(54) **Synthesis of electroactive crystalline nanometric LiMnPO4 powder**

(30) Priority: 22.12.2006 EP 06292049; 22.01.2007 US 881508 P
(62) Divisional of application: 07819855.3
(71) Applicant: UMICORE, 1000 Brussels (BE); CNRS (Centre National de La Recherche Scientifique), 75794 Paris Cedex 16 (FR)
(72) Inventor: Levasseur, Stephane, 2250 Olen (BE); Van Thournout, Michéle, 2250 Olen (BE)
(74) Representative: Knockaert, Guy

(57) **Abstract**

The invention describes a method for making nano-sized crystalline LiMnPO₄ powder with controlled morphology by direct precipitation at low temperature. It also describes a method for making a carbon coated LiMnPO₄ composite powder with enhanced electrochemical performances.

The manufacturing process comprises the steps of:
- providing a water-based mixture having at a pH between 6 and 10, containing a dipolar aprotic additive, and Li^{(I)}, Mn^{(II)} and P^{(V)} as precursor components;
- heating said water-based mixture to a temperature between 60 °C and its boiling point, thereby precipitating crystalline LiMnPO₄ powder.

The above process yields a powder for use as cathode material in Li batteries with high reversible capacity and good rate properties.

## Description

The invention describes a method for making nano-sized crystalline LiMnPO₄ powder (hereafter called LMP) with controlled morphology by direct precipitation at low temperature. It also describes a method for making a carbon coated LiMnPO₄ composite powder (hereafter called C-LMP) with enhanced electrochemical performances. The manufacturing method described yields a powder for use as cathode material in Li batteries with high reversible capacity and good rate properties.

The invention relates to a LMP powder for use as cathode material in Li batteries. It also describes a preferred manufacturing method involving a precipitation step of nanometric LiMnPO₄ followed by a carbon coating step.

Since the original work of Padhi et al. (JES, 144 (1997), 1188), phospho-olivines LiMPO₄ (with M = Fe, Ni, Co, Mn, ...) have appeared to be potential candidates to be used as cathode materials for Li batteries. Among all these isostructural compositions, LiFePO₄ was the most investigated and its commercialization is now a reality thanks to very high performances in term of reversible capacity, rate properties and cycle life (International Publication n° WO2004/001881 A2).

Due to the optimal value of its redox potential, LiMnPO₄ appears to be the best candidate among the LiMPO₄ family. Indeed, because the potential of Mn³⁺/Mn²⁺ is 4.1 V vs. Li⁺/Li more energy can be extracted from the system for equivalent capacity, thus solving the main issue from LiFePO₄ which has been reported to be the low specific energy density (Chen et al., JES, 149 (2002) A1184). Furthermore, this 4.1 V working potential is just below the limit of stability of the common organic electrolytes used in Li batteries thus allowing good cycle life without any degradation of the electrolyte in the battery.

However, Padhi et al. (JES, 144 (1997), 1188) and Okada et al. (J. Power Sources 97-98 (2001) 430) by using the same solid state synthesis method as for LiFePO₄ were unable to get any lithium out from LiMnPO₄. This is due to the fact that LiMnPO₄ suffers from very low intrinsic electronic and ionic conductivity and hence very poor electrochemical properties; this latter conductivity being estimated from measurements by Delacourt et al. to be several order of magnitude lower than that of LiFePO4 (JES, 152 (2005) A913).

A preferred approach for solving these conductivity problems is to make a composite material by minimizing the particle size of the olivine material thereby reducing the diffusion path length for lithium ions in the cathode material and establishing a large contact area with conductive additives such as carbon in order to enhance the electronic conductivity.

In addition to the small particle size, emphasis must be put on reducing the particle size distribution in order to ensure a homogeneous current distribution in the electrode and thus achieve better battery performances i.e. high power efficiency and long cycle life.

It has been shown that reduction of particle size cannot be achieved by standard solid state synthesis as it leads to micron sized particles, which are electrochemically inactive, despite addition of a large amount of carbon conductive additive (Padhi et al., (JES, 144 (1997) 1188); Okada et al., J. Power Sources, 97-98 (2001) 430). Only the very controversial work by Li et al. (ESSL, 5 (2002) A135) showed good cycling properties with reversible capacity as high as 140 mAh/g with 9.8 %wt carbon content in the C-LiMnPO₄ composite made by solid state mixing of the reactants. Note that the rate used for such a measurement of the capacity, as well as the electrode loading were not mentioned in their paper. Furthermore, in US 6,749,967B2, these authors, while using the same type of synthesis, insisted on the fact that LiMnPO₄ was not giving significant capacity (Comparative Examples 1 and 2).

An alternative appears to be self assembling methods for synthesis. Yonemura et al. managed to synthesise C-LiMnPO₄ composites with only about 10 %wt carbon and an average particle size around 60-100 nm (Yonemura et al., JES, 151 (2004) A1352). The reversible capacity at C/25 was given to be 135 mAh/g. However, the need for a charging rate of C/ 1 00 for the material to be active in discharge led the authors to consider LiMnPO₄ an unacceptable choice to serve in a practical lithium battery.

Another approach would consist in directly precipitating crystalline LiMnPO₄ at low temperature thus preventing any grain growth from sintering. This has been recently demonstrated by Delacourt et al. (Chem. Mater., 16 (2004) 93) who synthesised 100 nm particles of crystalline LiMnPO₄ by precipitation in boiling water. This technique allowed enhancing the reversible capacity to 70 mAh/g at C/20 with 16.7 %wt C. Nevertheless, the morphology of the precipitated LiMnPO₄ particles was far from being perfect showing some agglomeration of primary particles. Furthermore, the precipitation time was far too long for industrial application (more than 2 days).

So far, the best electrochemical results were presented by Kwon et al., (ESSL, 9 (2006) A277). Using a sol-gel method, they managed to obtain 130 nm average particle size LiMnPO₄ powder containing 20 %wt carbon. Performances of 134 mAh/g at C/10 were reported, exceeding the best previously reported values of 70 mAh/g at C/20 (Delacourt et al., Chem. Mater., 16, (2004) 93) and 135 mAh/g at C/25 (Yonemura et al., JES, 151 (2004) A1352). Nevertheless, because of this high amount of carbon additive, practical use of this material in lithium battery is still questionable.

While LiFePO₄ could be synthesised as carbon free material (Nuspl et al., Proceedings of IMLB 12th Meeting, Nara, Japan, June 2004, ISBN1-56677-415-2, Abs. 293) and being electroactive as such, it has been clearly demonstrated than LiMnPO₄ must be used as a composite material with conductive additive (e.g. carbon). Therefore, the goal when developing LiMnPO₄ for battery application is to optimise the physical properties of the bare LiMnPO₄ in order to reduce at its maximum the amount of conductive additive that must be added during the synthesis process.

The invented process allows for the manufacture of crystalline LiMnPO₄ powder, comprising the steps of: providing a water-based mixture having at a pH between 6 and 10, containing a dipolar aprotic additive, and Li^{(I)}, Mn^{(II)} and P^{(V)} as precursor components; and heating said water-based mixture to a temperature between 60 °C and its boiling point, thereby precipitating crystalline LiMnPO₄ powder. The obtained powder can be subjected to a post-treatment by heating it in non-oxidising conditions.

A pH of between 6 and 8 is however preferred to avoid any precipitation of Li₃PO₄. The additive is preferably a dipolar aprotic compound without chelating or complexation propensity.

The production of the crystalline LiMnPO₄ powder or the thermal post-treatment can advantageously be performed in the presence of at least one further component, in particular a carbon containing or electron conducting substance, or the precursor of an electron conducting substance.

It is useful to introduce at least part of the Li^{(I)} is as LiOH. Similarly, at least part of the P^{(V)} can be introduced as H₃PO₄. The pH of the water-based mixture can be obtained by adjusting the ratio of LiOH to H₃PO₄.

It is advisable to use a water-based mixture with an atmospheric boiling point of between 100 and 150°C, and preferably between 100 and 120 °C. Dimethylsulfoxide (DMSO) is preferably used as the dipolar aprotic additive. The water-based mixture advantageously contains between 5 and 50 %mol, and preferably between 10 and 30 %mol, of DMSO. A lower DMSO concentrations result in a coarser particle size distribution; higher concentrations limit the availability of water, forcing to increase the volume of the apparatus.

The step of post treatment of the LiMnPO₄ is advantageously performed at a temperature of up to 650°C, and preferably of at least 300 °C. The lower limit is chosen in order to enhance the crystallinity of the precipitated LiMnPO₄; the upper limit is chosen so as to avoid the decomposition of the LiMnPO₄ into manganese phosphides.

The electron conducting substance can be carbon, in particular conductive carbon or carbon fibres. Alternatively, a precursor of an electron conducting substance can be used, in particular a polymer or sugar-type macromolecule.

The invention also pertains to a crystalline LiMnPO₄ powder for use as electrode material in a battery, having a particle size distribution with an average particle size d50 of less than 60 nm, and preferably of more than 20 nm. The maximum particle size is preferably less than or equal to 300 nm, preferably 200 nm. The particle size distribution is preferably mono-modal and the ratio (d90 - d10) / d50 is advantageously less than 0.8, preferably less than 0.65, and more preferably less than 0.5. The crystalline LiMnPO₄ powder advantageously contains less than 10 %wt of conductive additive, preferably less than 9 %wt. Conductive carbons, carbon fibres, amorphous carbons resulting from decomposition of organic carbon containing substances, electron conducting polymers, metallic powders, and metallic fibres are particularly well suited as conductive additives.

The invention also pertains to the use of the novel crystalline LiMnPO₄ powder for the manufacture of a lithium insertion-type electrode, by mixing said powder with a conductive carbon-bearing additive.

The invention also pertains to an electrode mix comprising the novel crystalline LiMnPO₄ powder. As an electrode mix for secondary lithium-batteries with non-aqueous liquid electrolyte, it advantageously comprises at least 80 %wt of LiMnPO₄, and is characterised by a reversible capacity of at least 80 %, and preferably at least 85 % of the theoretical capacity (171 mAh/g), when used as an active component in a cathode which is cycled between 2.5 and 4.5 V *vs*. Li⁺/Li at a discharge rate of 0.1 C at 25 °C. As an electrode mix for secondary lithium-batteries with non-aqueous gel-like polymer electrolyte, it advantageously comprises at least 80 %wt of LiMnPO₄, characterised by a reversible capacity of at least 80 %, and preferably at least 85 % of the theoretical capacity, when used as an active component in a cathode which is cycled between 2.5 and 4.5 V *vs*. Li⁺/Li at a discharge rate of 0.1 C at 25 °C. As an electrode mix for secondary lithium-batteries with non-aqueous dry polymer electrolyte, it advantageously comprises at least 70 %wt of LiMnPO₄, characterised by a reversible capacity of at least 80 %, and preferably at least 85 % of the theoretical capacity, when used as an active component in a cathode which is cycled between 2.5 and 4.5 V *vs*. Li⁺/Li at a discharge rate of 0.1 C at 25°C.

The invention thus discloses a LMP powder with small particle size of typically 30 - 60 nm, and narrow particle size distribution, obtained by direct precipitation at low temperature. This optimisation of the LiMnPO₄ crystallite morphology combined with appropriate carbon coating method allows using low C additive content (<9 %wt) for reaching high reversible capacity (≥145 mAh/g) at current rate of C/10 and at room temperature (25 °C), thus making this product of practical interest for lithium batteries.

Compared to prior art, this product lists all the advantages needed for being considered as potential cathode material in lithium battery, namely:
- direct precipitation of crystalline LiMnPO₄ at low temperature. This allows preventing any grain growth linked to sintering processes and obtaining nanometric particles size. It allows reducing kinetic limitations due to Li ions transport within the particle and thus fast charge/fast discharge of the battery (smaller size obtained versus all prior art);
- narrow particle size distribution ensures a homogeneous current distribution within the battery. This is especially important at high charge/discharge rates, where finer particles would get more depleted than coarser ones, a phenomenon leading to the eventual deterioration of the particles and to the fading of the battery capacity upon use (best results obtained at high rate (1 C) compared to prior art). Furthermore, it facilitates manufacturing of the electrode;
- use of limited amount of conductive coating in the composite powder (lower amount of carbon used compared to prior art). This allows maintaining energy density of the battery within practical ranges (best energy density compared to prior art at low (C/10) and high (1 C) rate).

The atmospheric boiling point of the water-based mixture is advisably between 100 and 150 °C, preferably between 100 and 120 °C. Use is made of a water-miscible additive as a co-solvent that will increase the precipitate nucleation kinetics thus reducing the size of the LiMnPO₄ nanometric particles. In addition to be miscible with water, useful co-solvents should be aprotic, i.e. show only a minor or complete absence of dissociation accompanied by release of hydrogen ions. Co-solvents showing complexation or chelating properties such as ethylene glycol do not appear suitable as they will reduce the kinetics of precipitation of LiMnPO₄ and thus lead to larger particle sizes. Suitable dipolar aprotic solvents are dioxane, tetrahydrofuran, N-(C₁-C₁₈-alkyl)pyrrolidone, ethylene glycol dimethyl ether, C₁-C₄-alkylesters of aliphatic C₁-C₆-carboxylic acids, C₁-C₆-dialkyl ethers, N,N-di-(C₁-C₄-alkyl)amides of aliphatic C₁-C₄-carboxylic acids, sulfolane, 1,3-di-( C₁-C₈-alkyl)-2-imidazolidinone, N-(C₁-C₈-alkyl)caprolactam, N,N,N', N'-tetra-(C₁-C₈-alkyl)urea, 1,3-di-(C₁-C₈-alkyl)-3,4,5,6-tetrahydro-2(1H)-pyrimidone, N,N,N',N'-tetra-(C₁-C₈-alkyl)sulfamide, 4-formylmorpholine, 1-formylpiperidine or 1-formylpyrrolidine, N-( C₁-C₁₈-alkyl)pyrrolidone, N-methylpyrrolidone (NMP), N-octylpyrrolidone, N-dodecylpyrrolidone, N,N-dimethylformamide, N,N-dimethylacetamide or hexamethylphosphoramide. Other alternatives such as tetraalkyl ureas are also possible. Mixtures of the abovementioned dipolar aprotic solvents may also be used. In a preferred embodiment, dimethylsulfoxide (DMSO) is used as solvent.

The Figures illustrating the invention are summarized as follows.
Fig. 1: XRD of the as obtained precipitate after 6h reaction time in (DMSO) with varying temperature (25, 60, 85, 100, and 108 °C).
Fig. 2: Refined XRD of the product of the invention (Example 1).
Fig. 3: SEM pictures of as obtained precipitate in DMSO (Example 1).
Fig. 4: Volumetric particle size distribution and cumulative distribution (% *vs*. nm) for the invented product (Example 1).
Fig. 5: Specific capacity (mAh/g active material) at low rate for Padhi et al. (A), Delacourt et al. (B), Kwon et al. (C), Yonemura et al. (D), and for invented products (E = Example 1, F = Example 2 , G = Example 3).
Fig. 6: Specific capacity (mAh/g active material) as a function of discharge rate (C) for Kwon et al. (Curve D), and for invented products (Curve E = Example 1, Curve G = Example 3.
Fig. 7: XRD of the as obtained precipitate in Ethylene Glycol (EG).
Fig. 8: SEM pictures of the as obtained precipitate in EG (Comparative Example 3).
Fig. 9: XRD of the as obtained precipitate in pure water (Comparative Example 4).

The invention is further illustrated in the following examples.

### Example 1

In a first step, DMSO is added to an equimolar solution of 0.1 M Mn^{(II)} in MnSO₄.H₂O and 0.1 M P^{(V)} in H₃PO₄, dissolved in H₂O under stirring. The amount of DMSO is adjusted in order to reach a global composition of 50 %vol water and 50 %vol DMSO corresponding to respectively about 80 %mol and 20 %mol.

In a second step, an aqueous solution of 0.3 M LiOH.H₂O is added to the solution at 25 °C; in order to increase the pH up to a value between 6.5 and 7.5. Hence, the final Li:Mn:P ratio is close to 3:1:1.

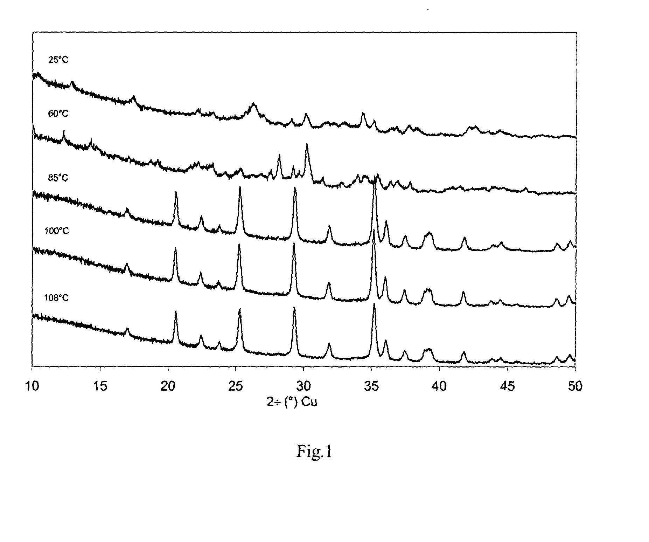

In a third step, the temperature of the solution is increased up to the solvent boiling point, which is 108 to 110 °C. After 6 h, the obtained precipitate is filtered and washed thoroughly with water. The pure crystalline LiMnPO₄ thus obtained is shown in Fig. 1 (108°C).

In a fourth step, the dried LiMnPO₄ precipitate is poured into a 30 %wt aqueous solution of sucrose (100 g LiMnPO₄ for 140 g sucrose solution) and stirred for 2 h. The mixture is dried at 150 °C under air during 12 h and, after careful deagglomeration, heat treated at 600 °C for 5 h under a slightly reducing N₂/H₂ 90/10 flow.

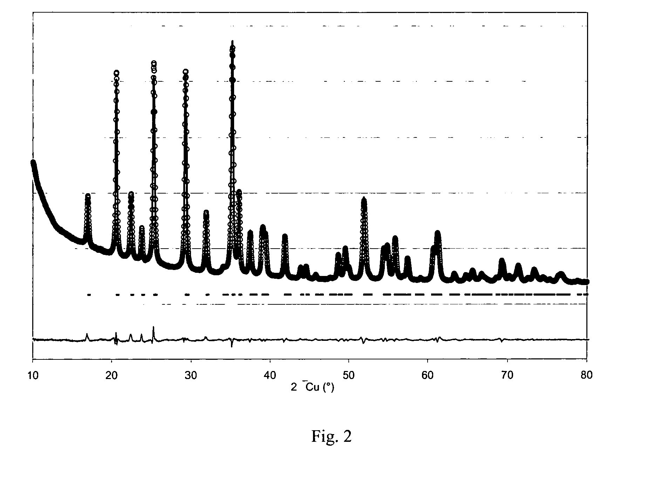

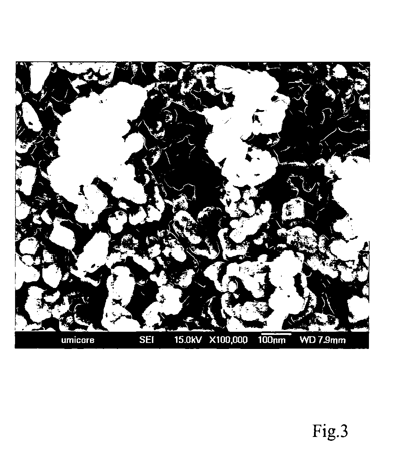

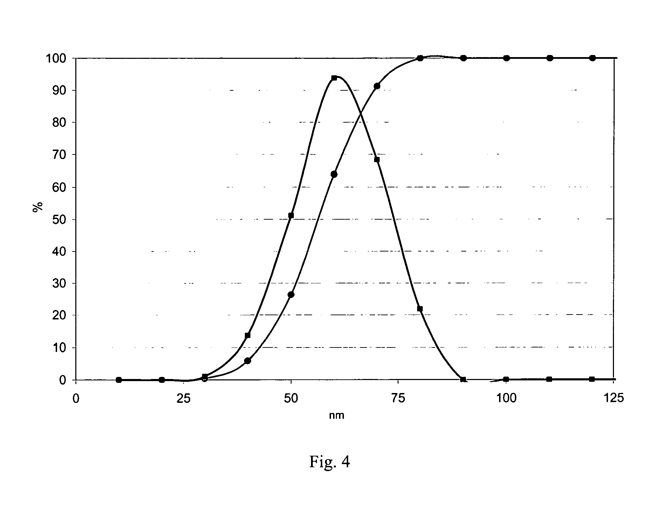

A well crystallized LiMnPO₄ powder containing 7.5 %wt carbon coating is produced this way. Fig. 2 shows the refined XRD pattern of the obtained carbon coated LiMnPO₄. The product shows pure crystalline LiMnPO₄ product with cell parameters a = 6.1030(4) Å, b = 10.4487(5)Å and c = 4.74457(2) Å. The crystallite size has been deduced from XRD to be 37 +/- 6 nm, which is much smaller than that obtained by Yonemura et al. (79.1 nm from XRD). The picture on Fig. 3 shows monodisperse small crystalline particles in the 30 - 60 nm range. The volumetric particle size distribution of the product was measured by using image analysis. As shown in Fig. 4, the d50 values is about 56 nm, while the relative span, defined as (d90 - d10) / d50, is about 0.5 (d10 = 42 nm, d90 = 69 nm).

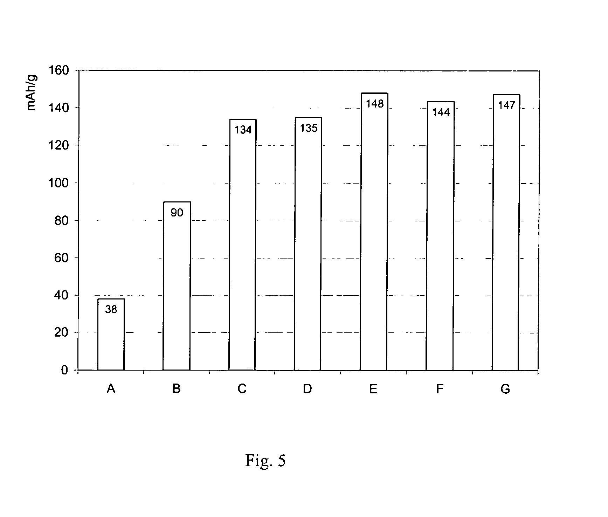

A slurry was prepared by mixing the C-LiMnPO₄ powder with 2.5 %wt carbon black (in order to reach 10 %wt total C content in the electrode) and 10 % PVDF into N-methylpyrrolidone (NMP) and deposited on an Al-foil as current collector. The obtained electrode containing 80 %wt active material was used to manufacture coin cells, using a loading of 5.7 mg/cm² active material. The negative electrodes are made of metallic Li. The coin cells are cycled in LiBF₄ based electrolyte between 2.5 and 4.5 V. Fig. 5 shows that high reversible capacity is obtained at low rate with 148 mAh/g (E). For comparison, reversible capacities at low rate reported so far in the literature are given from Padhi et al. historical work (A, 38 mAh/g) to Kwon et al. optimised work (D, 135 mAh/g). One can clearly see the improvement generated by the invention on reversible capacity values with an increase of 10 % in reversible capacity achievable.

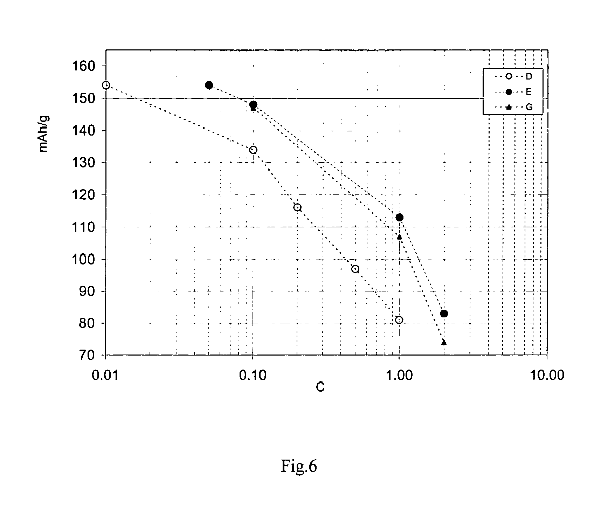

Fig. 6 shows that an excellent discharge capacity is maintained up to at least a discharge rate of 1 C (curve E). The capacity at 1 C is 113 mAh/g; corresponding to 66 % of the theoretical capacity. As a comparative example, results reported by Kwon et al. (only 47 % of the theoretical capacity at 1 C, curve D) show a lower overall reversible capacity and higher losses, especially at rates above 1C, even though only 72 % of active material was used in the electrode mixture, together with a loading of only 1.45 - 3.7 mg/cm². The lower active material content and the lower loading intend to give an upward bias to the reversible capacity measured.

### Example 2

The precipitation is performed like in Example 1 except that the temperature of the solution is limited to 100 °C. After 6h, the obtained precipitate is filtered and washed thoroughly with water. The pure crystalline LiMnPO₄ thus obtained is shown in Fig. 1 (100 °C).

In a second step, the dried LiMnPO₄ precipitate is poured into a 30 %wt aqueous solution of sucrose (100 g LiMnPO₄ for 140 g sucrose solution) and stirred for 2 h. The mixture is dried at 150 °C under air during 12 h and, after careful deagglomeration, heat treated at 600 °C for 5 h under a slightly reducing N₂/H₂ 90/10 flow.

A well crystallized LiMnPO₄ powder containing 8.4 %wt carbon coating is produced this way. A slurry was prepared by mixing the C-LiMnPO₄ powder with 1.6 %wt carbon black (in order to reach 10 %wt total C content in the electrode) and 10 % PVDF into N-methylpyrrolidone (NMP) and deposited on an Al foil as current collector. The obtained electrode containing 80 %wt active material was used to manufacture coin cells, using a loading of 6.2 mg/cm² active material. The negative electrodes are made of metallic Li. The coin cells are cycled in LiBF₄ based electrolyte between 2.5 and 4.5 V. Fig. 5 shows that high reversible capacity is obtained at low rate with 144 mAh/g (F).

### Example 3

The precipitation is performed like in Example 1, except that the temperature of the solution is limited to 85 °C. After 6 h, the obtained precipitate is filtered and washed thoroughly with water. The pure crystalline LiMnPO₄ thus obtained is shown in Fig. 1 (85 °C).

In a fourth step, the dried LiMnPO₄ precipitate is poured into a 30 %wt aqueous solution of sucrose (100 g LiMnPO₄ for 140 g sucrose solution) and stirred for 2h. The mixture is dried at 150 °C under air during 12 h and, after careful deagglomeration, heat treated at 600 °C for 5 h under a slightly reducing N₂/H₂ 90/10 flow.

A well crystallized LiMnPO₄ powder containing 8.3 %wt carbon coating is produced this way. A slurry was prepared by mixing the C-LiMnPO₄ powder with 1.7 %wt carbon black (in order to reach 10 %wt total C content in the electrode) and 10 % PVDF into N-methylpyrrolidone (NMP) and deposited on an Al foil as current collector. The obtained electrode containing 80 %wt active material was used to manufacture coin cells, using a loading of 6.4 mg/cm² active material. The negative electrodes are made of metallic Li. The coin cells are cycled in LiBF₄ based electrolyte between 2.5 and 4.5 V. Fig. 5 shows that high reversible capacity is obtained at low rate with 147 mAh/g (G). Fig. 6 shows that an excellent discharge capacity is maintained up to at least a discharge rate of 1C (curve G). The capacity at 1 C is 107 mAh/g, corresponding to 63 % of the theoretical capacity.

### Comparative Example 1

The precipitation is performed as in Example , except that the temperature of the solution is limited to 60 °C. After 6 h, the obtained precipitate is filtered and washed thoroughly with water. The product thus obtained is shown in Fig. 1 (60 °C) and corresponds to a mixture of various phosphates, sulphates and pyrophosphates species. No pure LiMnPO₄ is obtained this way.

### Comparative Example 2

The precipitation is performed as in Example 1, except that the temperature of the solution is kept at 25 °C. After 6 h stirring at 25 °C, the obtained precipitate is filtered and washed thoroughly with water. The product thus obtained is shown in Fig. 1 (25 °C) and corresponds to a mixture of various phosphates, sulphates and pyrophosphates species. No pure LiMnPO₄ is obtained this way.

### Comparative Example 3

In a first step, EG (ethylene glycol) is added to an equimolar solution of 0.1 M Mn^{(II)} in MnSO₄.H₂O and 0.1 M P^{(V)} in H₃PO₄, dissolved in H₂O under stirring. The amount of EG is adjusted in order to reach a global composition of 50 %vol water and 50 %vol EG.

In a second step, an aqueous solution of 0.3 M LiOH.H₂O is added to the solution at 25 °C, in order to increase the pH up to a value between 6.5 and 7.5. Hence, the final Li:Mn:P ratio is close to 3:1:1.

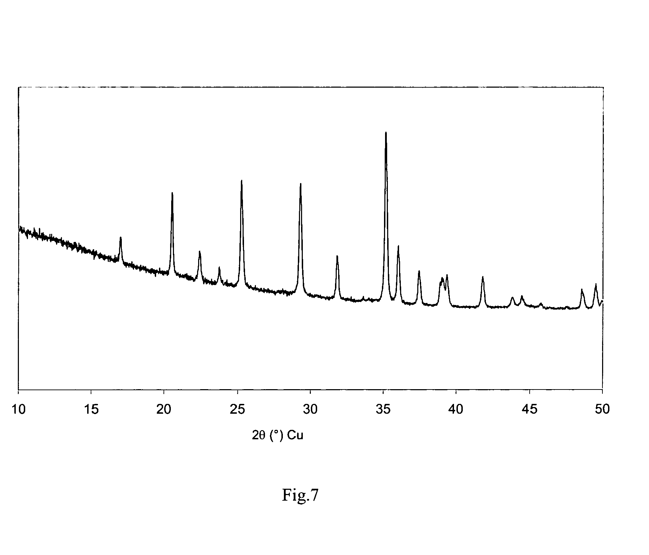

In a third step, the temperature of the solution is increased up to the solvent boiling point, which is 108 to 110 °C. After 6 h, the precipitate is filtered and washed thoroughly with water. The pure crystalline LiMnPO₄ thus obtained is shown in Fig. 7.

In a fourth step, the dried LiMnPO₄ precipitate is poured into a 30 %wt aqueous solution of sucrose (100 g LiMnPO₄ for 140 g sucrose solution) and stirred for 2 h. The mixture is dried at 150 °C under air during 12 h and, after careful deagglomeration, heat treated at 600 °C for 5 h under a slightly reducing N₂/H₂ 90/10 flow. A well crystallized LiMnPO₄ powder containing 8.5 %wt carbon coating is produced this way.

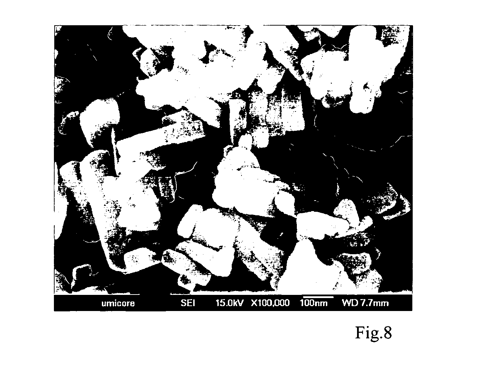

The SEM picture on Fig. 8 shows monodisperse small crystalline particles in the 100 - 150 nm range.

A slurry was prepared by mixing the C-LiMnPO₄ powder with 1.5 %wt carbon black (in order to reach 10 %wt total C content in the electrode) and 10 % PVDF into N-methylpyrrolidone (NMP) and deposited on an Al-foil as current collector. The obtained electrode containing 80 %wt active material was used to manufacture coin cells, using a loading of 5.9 mg/cm² active material. The negative electrodes are made of metallic Li. The coin cells are cycled in LiBF₄ based electrolyte between 2.5 and 4.5 V. Reversible capacity values at low rate of 43 mAh/g are obtained, which is significantly inferior to capacities obtained in the examples of the invention. Despite high phase purity, this large difference is believed to arise from the much larger particle size compared to product according to the invention. It emphasizes the need for an additive that does not reduce the kinetics of nucleation of LiMnPO₄.

### Comparative Example 4

In a first step, an equimolar solution of 0.1 M Mn^{(II)} in MnSO₄.H2O and 0.1 M P^{(V)} in H₃PO₄, dissolved in H₂O is prepared under stirring.

In a second step, an aqueous solution of 0.3 M LiOH.H₂O is added to the solution at 25 °C; in order to increase the pH up to a value between 6.5 and 7.5. Hence, the final Li:Mn:P ratio is close to 3:1:1.

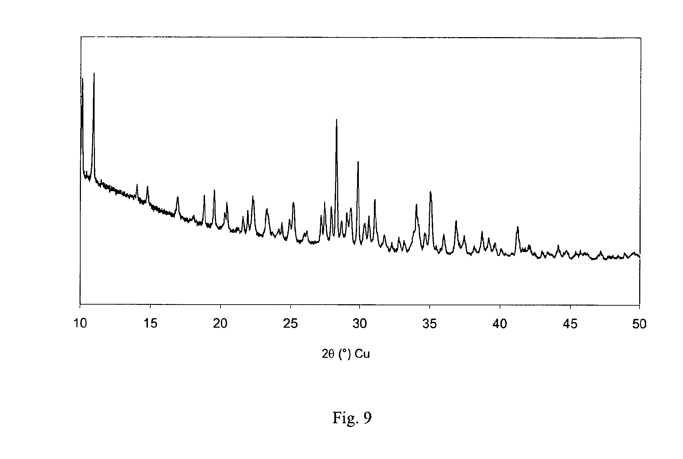

In a third step, the temperature of the solution is increased up its boiling point, which is 100 °C. After 6 h, the obtained precipitate is filtered and washed thoroughly with water. The product thus obtained is shown in Fig. 9 and corresponds to a mixture of LiMnPO₄ and various phosphates and pyrophosphates species. No pure LiMnPO₄ is obtained this way.
This emphasizes the need for an additive as co-solvent during the precipitation.

## Claims

1. An electrode mix for secondary lithium-batteries comprising at least 80 %wt of LiMnPO₄, **characterised by** a reversible capacity of at least 80 %, and preferably at least 85 % of the theoretical capacity, when used as an active component in a cathode which is cycled between 2.5 and 4.5 V *vs*. Li⁺/Li at a discharge rate of 0.1 C at 25 °C, said secondary lithium-batteries comprising a non-aqueous liquid electrolyte.

2. An electrode mix according to claim 1, wherein said secondary lithium-batteries comprises a non-aqueous gel-like polymer electrolyte.

3. An electrode mix according to claim 1, wherein said secondary lithium-batteries comprises a non-aqueous dry polymer electrolyte, and wherein said electrode mix comprises at least 70 %wt of LiMnPO₄.
